# FASCICULE DE BREVET EUROPEEN

(11) **EP 2 500 538 B1**
(45) Date de publication et mention de la délivrance du brevet: **11.01.2017**
(21) Numéro de dépôt: 12156716.8
(22) Date de dépôt: 23.02.2012
(51) Int. Cl.: F01N 3/20, F01N 13/02, F01N 3/025, F01N 3/021, F01N 3/035, F01N 3/28, F01N 3/10

(54) **Ensemble compact coudé de post-traitement de gaz d'échappement doté d'un bossage formant mélangeur de réducteur scr**
Kompakte gekrümmte Einheit zur Nachbehandlung von Abgasen, die mit einem Nocken ausgestattet ist, der einen SCR-Reduziermischer bildet
Compact elbow unit for exhaust gas post-treatment provided with a boss forming an SCR mixer

(30) Priorité: 16.03.2011 FR 1152142
(43) Date de publication de la demande: 19.09.2012
(73) Titulaire: Peugeot Citroën Automobiles SA, 78140 Vélizy Villacoublay (FR)
(72) Inventeur: Lere, SYLVAIN, 75018 PARIS (FR); Ferrand, NICOLAS, 92000 NANTERRE (FR)

(56) Documents cités:
- EP-A1- 2 386 736
- WO-A1-2009/011080
- GB-A- 2 452 249
- GB-A- 2 454 276
- US-A1- 2002 187 093
- US-A1- 2010 083 643
- US-A1- 2010 223 916

## Description

L'invention porte sur le domaine des moyens de dépollution des gaz d'échappement d'un moteur à combustion.

Les émissions polluantes des moteurs à combustion équipant les véhicules automobiles sont réglementées par des normes de plus en plus sévères. Les polluants réglementés sont, selon la technologie de moteur à combustion considérée, le monoxyde de carbone (CO), les hydrocarbures imbrûlés (HC), les oxydes d'azotes (NOₓ), et les particules.

Il est connu d'employer un certain nombre de moyens de dépollution dans la ligne d'échappement des moteurs à combustion pour en limiter les émissions de polluants réglementés. Un catalyseur d'oxydation permet le traitement du monoxyde de carbone, des hydrocarbures imbrûlés, et dans certaines conditions des oxydes d'azotes ; un filtre à particules peut être employé pour le traitement des particules de suie.

On désigne de manière générale ces dispositifs par le terme de moyens de « post-traitement » des gaz d'échappement.

Par exemple, pour satisfaire aux normes anti-pollution sur les émissions d'oxydes d'azote (NOₓ), un système spécifique de post-traitement peut être introduit dans la ligne d'échappement des véhicules, notamment des véhicules équipés de moteurs à mélange pauvre, c'est-à-dire du type diesel ou à allumage commandé fonctionnant avec un mélange stratifié (mélange carburé non-homogène présentant un taux de carburant inférieur à la stoechiométrie). Pour le traitement des oxydes d'azote (NOₓ), on connaît des technologies de réduction catalytique sélective, ou « SCR » pour « selective catalytic reduction », qui consistent à réduire les NOₓ par introduction d'un agent réducteur (ou d'un précurseur d'un tel agent réducteur) dans les gaz d'échappement. Il peut par exemple s'agir d'une solution d'urée, dont la décomposition va permettre l'obtention d'ammoniac qui servira d'agent réducteur, mais également d'un réducteur ou d'un précurseur d'un tel réducteur sous forme gazeuse. On parlera dans la suite du présent document d'une manière générale de « réducteur » pour désigner un agent réducteur ou un précurseur d'agent réducteur.

Classiquement, le catalyseur SCR est placé sous la caisse du véhicule, loin du moteur car le réducteur injecté nécessite un long parcours dans la ligne d'échappement pour se décomposer d'une part, et des volumes libres suffisants pour être implanté d'autre part. Si la distance parcourue par le réducteur n'est pas suffisante le risque d'encrassement de la ligne d'échappement est important.

Or, s'il est placé loin de la sortie du collecteur d'échappement du moteur, ou de la sortie de la turbine dans le cas d'un moteur suralimenté, le catalyseur SCR peut ne pas être actif dès les premières secondes de fonctionnement du véhicule, et laisse alors passer une quantité importante d'oxydes d'azote non traités. De même, l'injecteur de réducteur, qui nécessite d'atteindre un certain niveau de température pour être opérationnel (amorçage suffisant de la décomposition du précurseur d'urée (adblue) ou préchauffage du système de mise à disposition de réducteur (gaz)), souffre de cet éloignement de la sortie du collecteur d'échappement.

Il est connu de la demande de brevet français déposée au nom de la demanderesse sous le numéro FR 11 51374 (non publiée à ce jour) un système regroupant les mêmes éléments de dépollution dans une architecture compacte en U. De tels dispositifs peuvent être totalement implantés en sous-capot moteur.

L'adoption d'un tel dispositif de post-traitement offre, outre des avantages en termes de performances des moyens de post-traitement, des avantages en termes d'implantation des systèmes dans le véhicule, en supprimant tout moyen de post-traitement de la zone sous-plancher du véhicule.

Il nécessaire dans tout système SCR d'assurer un bon mélange du réducteur dans les gaz d'échappement préalablement à son arrivée sur le catalyseur SCR.

Le document US 2010/223916 présente des bossages dans la paroi de l'enveloppe participant localement au mélange et répartition des gaz en entrée du SCR.

Il est connu d'employer pour favoriser ce mélange un dispositif appelé mélangeur, interposé entre le point d'injection de réducteur et le catalyseur SCR, qui vise à créer des turbulences dans les gaz d'échappement.

Il existe de nombreux type de mélangeurs adaptés à cet usage. Les mélangeurs sont optimisés pour réduire autant que possible la longueur de la ligne d'échappement nécessaire à l'obtention d'une bonne homogénéité du mélange réducteur/gaz d'échappement. On connait par exemple au travers du document FR2947003 un mélangeur performant pour assurer un mélange homogène sur une longueur linéaire de ligne d'échappement très courte.

Les mélangeurs sont cependant des dispositifs souvent complexes, et adaptés à une ligne d'échappement dans laquelle les différents dispositifs de dépollutions sont disposés les uns à la suite des autres, dans une disposition longitudinale classique. La plupart des mélangeurs connus sont cylindriques et doivent être disposés dans une enveloppe ou « canning » cylindrique.

Ces dispositifs ne sont pas donc adaptés à une architecture compacte en U ou plus généralement comportant une enveloppe ou « canning » coudée (par exemple une architecture de canning en L), car le mélange ne peut pas être effectué par un mélangeur traditionnel dans des parties non droites et/ou non cylindriques. De plus ces dispositifs engendrent des pertes de charge non négligeables, qui pénalisent la performance du moteur équipé.

On connaît néanmoins du document WO10053033 des moyens de mélange adaptés à une configuration dans laquelle les gaz d'échappement, dans lesquels le réducteur a préalablement été introduit, sont introduits dans une enveloppe contenant un catalyseur SCR positionné à 90° de la direction d'introduction des gaz. Cependant, le système nécessite la préintroduction du réducteur dans les gaz, avant l'entrée dans le canning, et d'autre part n'est pas adaptée à une architecture de canning en U ou en L, mais à une architecture présentant un conduit d'échappement rentrant à 90° dans un canning, pour expulser les gaz d'échappement sur un paroi du canning présentant une géométrie particulière générant un reflux en direction opposée de la direction d'introduction des gaz.

L'objet de l'invention est de proposer des moyens pour assurer un mélange homogène d'un fluide introduit dans les gaz d'échappement d'un moteur à combustion, dans le cadre d'une architecture d'un dispositif de post-traitement des gaz d'échappement compact présentant une enveloppe (canning) unique et coudée, par exemple en « U » ou en « L », en tirant profit de cette configuration pour garantir la fonction de mélange de manière efficace, simple, et à un coût réduit.

Plus précisément, l'invention porte donc sur un ensemble de post-traitement des gaz d'échappement d'un moteur à combustion, comportant, selon le sens d'écoulement des gaz d'échappement du moteur dans ledit ensemble :
- un catalyseur d'oxydation ;
- une embouchure d'un moyen d'introduction de réducteur ou de précurseur d'un réducteur pour la réduction catalytique sélective des oxydes d'azote ;
- un catalyseur de réduction catalytique sélective des oxydes d'azote ;
   l'ensemble étant disposé dans une enveloppe unique coudée entre le catalyseur d'oxydation et le catalyseur de réduction catalytique sélective des oxydes d'azote, caractérisé par un bossage saillant d'une paroi de l'enveloppe située en regard d'une face de sortie du catalyseur d'oxydation, ledit bossage étant arrangé de sorte à orienter une part du flux des gaz d'échappement vers l'embouchure des moyens d'introduction.

Le principe de l'invention est donc d'utiliser le coude de l'enveloppe et d'y ajouter un bossage sur la face qui se trouve à l'opposé du flux d'air sortant du catalyseur d'oxydation. Ce bossage réoriente en partie le flux vers l'injecteur de réducteur (par exemple à base d'urée) tout en créant des turbulences permettant le mélange avec les gaz d'échappement. La recirculation à contre flux, conjuguée au débit de gaz entrant crée alors une zone de turbulence au niveau de l'injecteur permettant un mélange présentant une bonne homogénéité. La forme du bossage peut être adaptée pour offrir l'effet recherché, tant dans le cadre de lignes d'échappement cylindriques que dans le cadre de lignes d'échappement non cylindriques.

Selon les variantes et modes de réalisation considérés de l'invention, l'ensemble peut présenter une ou plusieurs des caractéristiques suivantes :
- l'enveloppe coudée présente un coude sensiblement à angle droit entre le catalyseur d'oxydation et le catalyseur de réduction catalytique sélective des oxydes d'azote ;
- l'enveloppe présente une forme générale en U, ou l'enveloppe présente une forme générale en L ;
- le bossage est en outre arrangé de sorte à orienter une part du flux des gaz d'échappement vers les parois de l'enveloppe situées de part et d'autre du bossage ;
- le bossage présente une section transversale en chevron, dans un plan parallèle à la face de sortie du catalyseur d'oxydation ;
- le bossage est une pièce rapportée à l'enveloppe, ou le bossage est embouti dans la paroi de l'enveloppe.

L'invention est décrite plus en détail ci-après et en référence aux figures représentant schématiquement le système dans son mode de réalisation préférentiel.

La figure 1 présente schématiquement un ensemble de post-traitement selon une architecture en U, telle que connue dans l'état de la technique.

La figure 2 présente schématiquement un ensemble de post-traitement selon une architecture en U, mettant en jeu l'invention dans une variante préférentielle.

La figure 3 présente schématiquement une autre variante de l'invention.

Les figures 4a, 4b et 4c présentent schématiquement un bossage mis en jeu dans l'invention selon un mode de réalisation préférentiel, dans 3 variantes de réalisation.

Un ensemble de dépollution compact en U, pour la dépollution des gaz d'échappement d'un moteur à combustion, comporte un cône d'entrée 1, une première branche droite comportant un premier pain catalytique, généralement un catalyseur d'oxydation 2, une liaison fluidique présentant un premier coude à 90° 3 puis un second à 90° 4, dans laquelle est implantée l'embouchure d'un moyen d'introduction de réducteur 5 et une seconde branche droite comportant un mélangeur 6 et un catalyseur SCR 7 pour la réduction catalytique sélective des oxydes d'azote (ou un filtre à particule portant une imprégnation catalytique SCR).

Bien que l'ensemble des figures ici présentées portent sur une architecture de dépollution en « U », l'invention est applicable à tout ensemble présentant une enveloppe ou canning unique coudée, et notamment à une architecture en « L » dans laquelle le l'enveloppe présente un seul coude à 90° environ. Par exemple et de manière non limitative, on peut imaginer un ensemble de post-traitement des gaz d'échappement d'un moteur à combustion comportant, selon le sens d'écoulement des gaz d'échappement du moteur :
- un catalyseur d'oxydation ;
- un catalyseur de réduction catalytique sélective des oxydes d'azote ;
- un filtre à particules, préférentiellement du type mettant en jeu un additif abaissant la température d'oxydation des particules de suie ;
   dans lequel l'ensemble est disposé dans une enveloppe unique comportant :
   - une première branche rectiligne comportant le catalyseur d'oxydation ;
   - une seconde branche rectiligne comportant dans une enveloppe unique le catalyseur de réduction catalytique sélective des oxydes d'azote (5) et le filtre à particules ;
   - et un coude formant un angle compris entre 60° et 120°, formant un raccord fluidique entre les première et seconde branches.

Le coude forme peut former un angle de 90° environ, conférant à l'ensemble une géométrie en « L ».

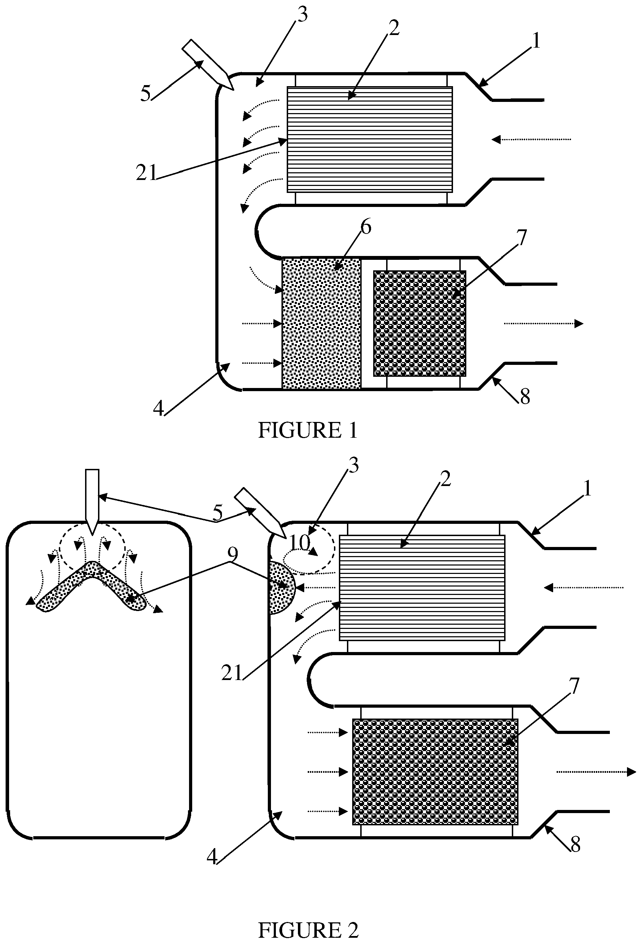

Dans l'invention, et tel que présenté en figure 2, on ajoute un bossage 9 sur la face du coude qui se trouve à contre flux, c'est-à-dire sur la paroi de l'enveloppe située en regard de la face de sortie 21 du catalyseur d'oxydation 2.

Le bossage 9 est de préférence en tôle acier pour résister aux températures des gaz d'échappement, et présente alors une épaisseur minimum de 2mm pour ne pas se déformer sous la pression des gaz.

Le bossage 9 est alors rapporté et fixé, par exemple par soudage, à l'intérieur de l'enveloppe de l'ensemble de dépollution.

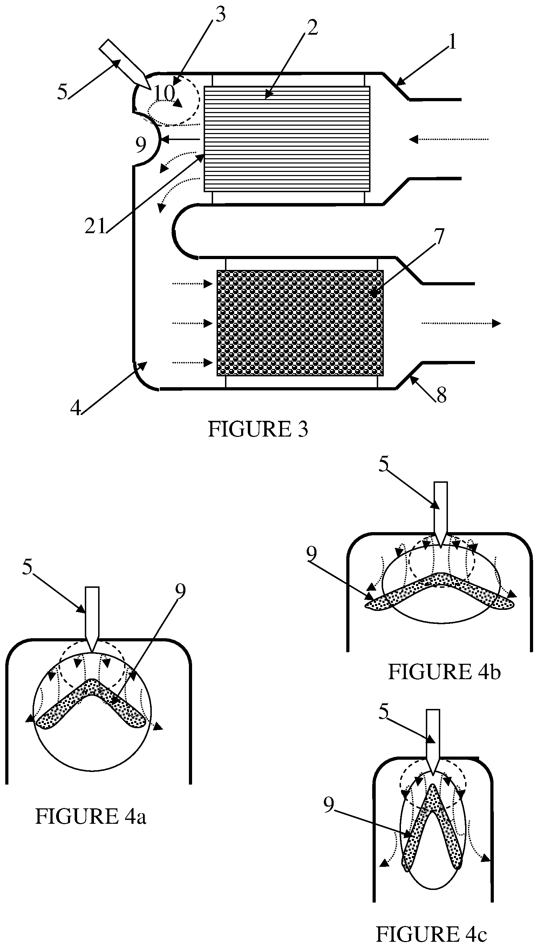

Une solution alternative consiste à créer le bossage par emboutissage lors de la fabrication du coude. Ce mode de réalisation est schématisé en figure 3.

La forme de ce bossage 9 intégré sur une face de l'enveloppe qui peut être plane n'est pas contraint en terme de géométrie comme le sont les mélangeurs présents généralement dans les branches rectiligne des enveloppes.

Le bossage 9 permet d'orienter une part du flux des gaz d'échappement qui sort du catalyseur d'oxydation 2 dans une zone de mélange 10, vers l'embouchure (ou nez) de l'injecteur de solution d'urée, c'est-à-dire du moyen d'introduction de réducteur 5. Il se crée un écoulement turbulent des gaz dans cette zone, généré par un reflux des gaz à contre courant, ce qui favorise le mélange du réducteur dans les gaz d'échappement.

Les figures 4a, 4b et 4c précisent une forme préférentielle du bossage, selon que le catalyseur d'oxydation 2 présente une section circulaire ou ovalisée. Le bossage présente une section transversale (dans un plan parallèle à la face de sortie 21 du catalyseur d'oxydation 2, ou orthogonal à la direction du flux des gaz d'échappement en sortie dudit catalyseur d'oxydation 2) sensiblement en forme de chevron, ou de « V » pointant vers la zone de mélange 10.

Cette forme particulière en chevrons permet de favoriser l'orientation d'une part du flux des gaz d'échappement vers les parois de l'enveloppe situées de part et d'autre du bossage 9. Cela favorise d'autant plus la diffusion et le mélange du réducteur dans le raccord fluidique précédant le catalyseur SCR, de sorte que le mélange entre les gaz d'échappement et le réducteur arrive de manière homogène sur toute la face d'entrée du catalyseur SCR 7.

La figure 4a correspond à une architecture dans laquelle le catalyseur d'oxydation présente une section transversale circulaire. Les figures 4a et 4b correspondent à des architectures dans lesquelles le catalyseur d'oxydation présente une section transversale ovalisée. Sur ces figures, la projection de la section transversale du catalyseur d'oxydation 2 est représentée par le cercle ou l'ovale correspondant. Selon le type section du catalyseur 2, l'angle formé par la chevron est adapté.

Dans l'invention, tel qu'on le voit aux figures 2 et 3, l'espace disponible pour les éléments de post-traitement après le coude de l'enveloppe, en l'occurrence dans la seconde branche du « U » dans le cadre de l'architecture représentée, est largement augmentée par la libération de l'espace prévu pour l'adaptation d'un mélangeur 5.

On peut donc : ou augmenter la taille des éléments de dépollution ou compacter l'échappement. Par exemple, en augmentant la taille d'un filtre à particule revêtu d'une imprégnation SCR, on augmente sa capacité de traitement des NOₓ mais aussi sa capacité de stockage de particules. Si le filtre est du type à régénération périodiques, on augmente la durée entre deux régénérations pilotées, qui entrainent une surconsommation de carburant.

L'invention propose ainsi un dispositif offrant de multiples avantages.

Un mélangeur par bossage soudé permet par rapport à un mélangeur additionnel classique :
- un gain en terme de perte de charge, et donc de meilleures performances du moteur ;
- un gain de volume, pouvant être utilisé pour la dépollution ou pour compacter l'échappement ;
- une compatibilité accrue avec des échappements de section non circulaire ;
- un gain de masse et de coût d'obtention par rapport à un mélangeur tel que connu dans l'état de la technique ;
- un gain de coût de mise en oeuvre par rapport à un mélangeur tel que connu dans l'état de la technique.

Un mélangeur par bossage embouti présente en outre par rapport à un mélangeur par bossage soudé :
- un gain de masse supplémentaire (pas de matière rapportée) ;
- un surcoût lié à la conception et l'emploi d'outillages spécifiques d'emboutissage, au moins en partie compensé par la suppression d'une soudure.

## Revendications

1. Ensemble de post-traitement des gaz d'échappement d'un moteur à combustion, comportant successivement selon le sens d'écoulement des gaz d'échappement du moteur dans ledit ensemble :
• un catalyseur d'oxydation (2) ;
• une embouchure d'un moyen d'introduction (5) de réducteur ou de précurseur d'un réducteur pour la réduction catalytique sélective des oxydes d'azote ;
• un catalyseur de réduction catalytique sélective des oxydes d'azote (7);
l'ensemble étant disposé dans une enveloppe unique coudée entre le catalyseur d'oxydation (2) et le catalyseur de réduction catalytique sélective des oxydes d'azote (7), **caractérisé par** un bossage (9) saillant vers l'intérieur d'une paroi de l'enveloppe située en regard d'une face de sortie (21) du catalyseur d'oxydation (2), ledit bossage (9) orientant une part du flux des gaz d'échappement vers l'embouchure des moyens d'introduction (5), ladite embouchure des moyens d'introduction (5) étant positionnée au niveau du coude sensiblement à angle droit.

2. Ensemble selon la revendication précédente, dans lequel l'enveloppe coudée présente un coude sensiblement à angle droit entre le catalyseur d'oxydation (2) et le catalyseur de réduction catalytique sélective des oxydes d'azote (7).

3. Ensemble selon la revendication 1 ou 2, dans lequel l'enveloppe présente une forme générale en U.

4. Ensemble selon la revendication 1 ou 2, dans lequel l'enveloppe présente une forme générale en L.

5. Ensemble selon l'une quelconque des revendications précédentes, dans lequel le bossage (9) est en outre arrangé de sorte à orienter une part du flux des gaz d'échappement vers les parois de l'enveloppe situées de part et d'autre du bossage (9).

6. Ensemble selon l'une quelconque des revendications précédentes, dans lequel le bossage (9) présente une section transversale en chevron, dans un plan parallèle à la face de sortie (21) du catalyseur d'oxydation (2).

7. Ensemble selon l'une quelconque des revendications précédentes, dans lequel le bossage (9) est une pièce rapportée à l'enveloppe.

8. Ensemble selon l'une quelconque des revendications 1 à 6, dans lequel le bossage (9) est embouti dans la paroi de l'enveloppe.

## Patentansprüche

1. Nachbehandlungseinheit der Abgase einer Brennkraftmaschine, die nacheinander in die Strömungsrichtung der Abgase der Brennkraftmaschine in der Einheit Folgendes umfasst:
• einen Oxidationskatalysator (2),
• eine Mündung eines Einführmittels (5) eines Reduktionsmittels oder Vorläufers eines Reduktionsmittels für die selektive katalytische Reduktion der Stickstoffoxide,
• einen selektiven katalytischen Reduktionskatalysator (7) der Stickstoffoxide,
wobei die Einheit in einem einzigen gebogenen Mantel zwischen dem Oxidationskatalysator (2) und dem selektiven katalytischen Reduktionskatalysator der Stickstoffoxide (7) angeordnet ist, **gekennzeichnet durch** einen Höcker (9), der zu dem Inneren einer Wand des Mantels vorsteht, die Wand des Mantels gegenüber einer Ausgangsseite (21) des Oxidationskatalysators (2)angeordnet ist, wobei der Höcker (9) einen Teil des Stroms der Abgase zu der Mündung der Einführmittel (5) richtet, wobei die Mündung der Einführmittel (5) im Bereich des Bogens mit im Wesentlichen rechtem Winkel positioniert ist.

2. Einheit nach dem vorhergehenden Anspruch, wobei der gebogene Mantel einen Bogen im Wesentlichen im rechten Winkel zwischen dem Oxidationskatalysator (2) und dem selektiven katalytischen Reduktionskatalysator der Stickstoffoxide (7) aufweist.

3. Einheit nach Anspruch 1 oder 2, wobei der Mantel eine allgemeine U-Form aufweist.

4. Einheit nach Anspruch 1 oder 2, wobei der Mantel eine allgemeine L-Form aufweist.

5. Einheit nach einem der vorhergehenden Ansprüche, wobei der Höcker (9) außerdem derart eingerichtet ist, dass er einen Teil des Stroms der Abgase zu den Wänden des Mantels, die zu beiden Seiten des Höckers (9) liegen, richtet.

6. Einheit nach einem der vorhergehenden Ansprüche, wobei der Höcker (9) einen Zickzack-Querschnitt in einer Ebene parallel zu der Ausgangsseite (21) des Oxidationskatalysators (2) aufweist.

7. Einheit nach einem der vorhergehenden Ansprüche, wobei der Höcker (9) ein an den Mantel angebautes Teil ist.

8. Einheit nach einem der Ansprüche 1 bis 6, wobei der Höcker (9) in der Wand des Mantels ausgetieft ist.

## Claims

1. An assembly for the post-treatment of the exhaust gases of an internal combustion engine, comprising successively along the direction of flow of the exhaust gases of the engine in said assembly:
• an oxidation catalyst (2);
• an opening of an introduction means (5) of reducer or precursor of a reducer for the selective catalytic reduction of nitrogen oxides;
• a catalyst for the selective catalytic reduction of nitrogen oxides (7);
the assembly being disposed in a single elbow housing between the oxidation catalyst (2) and the catalyst for the selective catalytic reduction of nitrogen oxides (7), **characterized by** a boss (9) projecting towards the interior of a wall of the housing situated opposite an outlet face (21) of the oxidation catalyst (2), said boss (9) directing a portion of the flow of the exhaust gases towards the opening of the introduction means (5), said opening of the introduction means (5) being positioned at the level of the substantially right-angled elbow

2. The assembly according to the preceding claim, in which the elbow housing has a substantially right-angled elbow between the oxidation catalyst (2) and the catalyst for the selective catalytic reduction of nitrogen oxides (7).

3. The assembly according to claim 1 or 2, in which the housing has a general U-shape.

4. The assembly according to claim 1 or 2, in which the housing has a general L-shape.

5. The assembly according to any one of the preceding claims, in which the boss (9) is, in addition, arranged so as to direct a portion of the flow of the exhaust gases towards the walls of the housing situated on either side of the boss (9).

6. The assembly according to any one of the preceding claims, in which the boss (9) has a chevron-shaped cross-section, in a plane parallel to the outlet face (21) of the oxidation catalyst (2).

7. The assembly according to any one of the preceding claims, in which the boss (9) is a piece added to the housing.

8. The assembly according to any one of claims 1 to 6, in which the boss (9) is stamped in the wall of the housing.
